# EUROPÄISCHE PATENTSCHRIFT

(11) **EP 2 035 230 B1**
(45) Veröffentlichungstag und Bekanntmachung des Hinweises auf die Patenterteilung: **11.12.2013**
(21) Anmeldenummer: 07764778.2
(22) Anmeldetag: 22.06.2007
(51) Int. Cl.: B32B 38/00, B42D 15/10

(54) **VERFAHREN ZUR HERSTELLUNG EINES LAMINIERTEN SCHICHTVERBUNDS, LAMINIERTER SCHICHTVERBUND UND DESSEN VERWENDUNG**
METHOD FOR PRODUCTION OF A LAMINATED MULTILAYER COMPOSITE, A LAMINATED MULTILAYER COMPOSITE, AND USE THEREOF
PROCÉDÉ POUR FABRIQUER UN COMPOSITE STRATIFIÉ LAMINÉ, COMPOSITE STRATIFIÉ LAMINÉ ET UTILISATION DUDIT COMPOSITE

(30) Priorität: 27.06.2006 DE 102006029397
(43) Veröffentlichungstag der Anmeldung: 18.03.2009
(73) Patentinhaber: OVD Kinegram AG, 6301 Zug (CH)
(72) Erfinder: MINNETIAN, Ohannes, CH-6274 Eschenbach (CH)
(74) Vertreter: Zinsinger, Norbert
(86) Internationale Anmeldenummer: PCT/EP2007/005506
(87) Internationale Veröffentlichungsnummer: WO 2008/000392

(56) Entgegenhaltungen:
- EP-A- 1 283 103
- DE-A1- 10 013 410
- US-A1- 2004 031 855

## Beschreibung

Die Erfindung betrifft ein Verfahren zur Herstellung eines laminierten Schichtverbunds umfassend eine Trägerfolie, welche mindestens eine polymere Schichtlage, insbesondere aus Polyvinylchlorid oder Polyethylenterephthalat, aufweist, mindestens ein auf die mindestens eine polymere Schichtlage aufgebrachtes Sicherheitselement und mindestens eine Kunststofffolie. Die Erfindung betrifft weiterhin nach diesem Verfahren hergestellte Schichtverbunde und deren Verwendung.

Aus DE 694 15 547 T2 sind derartige laminierte Schichtverbunde in Form von Sicherheitskarten sowie deren Herstellung bekannt. Eine Sicherheitskarte umfasst dabei einen durchsichtigen oder opaken Träger, eine durchsichtige Hüllschicht und ein Sicherheitsbild, das zwischen dem Träger und der Hüllschicht angeordnet ist. Der Träger und die Hüllschicht sind unmittelbar, ohne dazwischen eine Klebstoffschicht vorzusehen, zusammenlaminiert bzw. miteinander verschmolzen. Der Träger ist dabei unter anderem in Form einer Polyvinylchloridfolie und die Hüllschicht in Form einer amorphen Copolyesterfolie ausgebildet. Das Sicherheitsbild kann Perlglanzpigmente in einem durchsichtigen Binder, Hologramme, mikrostrukturierte Oberflächen, welche optische Spezialeffekte liefern, wie etwa holographische Bilder oder Beugungseffekte, beinhalten. Weiterhin beschreibt die DE 694 15 547 T2 in einem Vergleichsbeispiel die Lamination von zwei Schichten aus Polyvinylchlorid mit einer Dicke von jeweils 250 µm, welche bei einer Temperatur von 140°C über eine Zeitspanne von 5 min laminiert werden. Die Verwendung von zwei Schichten aus Polyvinylchlorid als Träger und Hüllschicht wird dabei aufgrund der erforderlichen langen Laminierzeit von 5 min als ungeeignet betrachtet.

Aufgrund der geringen Materialkosten von insbesondere Polyvinylchlorid ist dieses Material allerdings als Material für Karten jeglicher Art von stetig wachsendem Interesse, nachdem die Herstellung von Karten, welche Sicherheitselemente enthalten, wie beispielsweise Ausweiskarten, Bankkarten, Kreditkarten, Identifikationskarten oder ähnliches, einem enormen Kostendruck unterliegt. Es ist bekannt, derartige Karten mit Sicherheitselementen in Form eines Hologramms, Kinegram^{®}s oder dergleichen auszustatten. Die Sicherheitselemente weisen spezifische optische Effekte auf, die vom Betrachtungswinkel abhängig sind und ohne jegliche Hilfsmittel mit dem menschlichen Auge überprüft werden können. Allerdings ist die Herstellung mit einem erheblichen technologischen Aufwand verbunden. Das Vorhandensein eines derartigen Sicherheitselements mit den entsprechenden optischen Effekten wird als Echtheitskriterium bewertet, d. h. vom Vorhandensein eines derartigen Sicherheitselementes wird auf die Echtheit der Karte geschlossen.

Es hat sich jedoch gezeigt, dass das Laminieren von Trägerfolien, insbesondere aus Polyvinylchlorid, auf welche ein Sicherheitselement aufgebracht wurde, nicht unproblematisch ist.

Die EP 1 283 103 A1 offenbart einen Kartenaufbau, bei dem einzelne Schichtlagen miteinander untrennbar verbunden sind. Der Kartenaufbau umfasst insbesondere eine Struktur mit zylindrisch gekrümmten Oberflächen, welche ein Linsenarray bereitstellen. Diese werden beim Laminieren des Schichtverbunds teilweise eingeebnet. Eine Wärmezufuhr erfolgt daher zum Zwecke des lokalen Verformens. Abschließend wird ein Hologramm auf den eingeebneten Bereich aufgebracht.

Eine Trägerfolie kann auf unterschiedliche Weise mit einem Sicherheitselement versehen werden. Ein bevorzugtes, besonders schnelles und sauberes Verfahren zum Aufbringen des Sicherheitselements bietet die Transferfolientechnik, die bei der Herstellung von Sicherheitselementen im Bereich von Karten bereits hinreichend bekannt ist. Eine Transferfolie umfasst üblicherweise eine Trägerbahn, auf welcher ablösbar eine dünne, nicht selbsttragende Übertragungslage angeordnet ist, welche mittels eines gegebenenfalls beheizten Stempels bereichsweise oder vollflächig auf die Trägerfolie übertragen wird. Die Übertragungslage wird dabei üblicherweise mittels eines Klebers auf der Trägerfolie befestigt, wobei der Kleber mittels Wärme, Druck, Strahlung usw. oder einer Kombination aus diesen aktiviert wird. Beim Heißprägeverfahren sorgt ein beheizter Stempel für die Aktivierung einer Heißkleberschicht, welche die erwärmten Bereiche der Übertragungslage an der Trägerfolie befestigt. Beim nachfolgenden Abziehen der Trägerbahn der Transferfolie von der Trägerfolie verbleiben auf der Trägerfolie lediglich die mittels Heißkleber befestigten Bereiche der Übertragungslage, während benachbarte, nicht erwärmte Bereiche der Übertragungslage mit der Trägerbahn entfernt werden.

Ein Sicherheitselement kann aber auch mittels einer selbsttragenden Folie, insbesondere in Form einer Laminierfolie oder eines Stücks daraus, auf die Trägerfolie aufgebracht sein.

Nach dem Aufbringen eines Sicherheitselements auf eine Trägerfolie, insbesondere durch Prägen, ist das Sicherheitselement gut erkennbar und liegt optisch einwandfrei vor. Nach dem Überlaminieren der Trägerfolie mit einer weiteren Kunststofffolie zeigt sich allerdings am Sicherheitselement ein Orangenhauteffekt derart, dass das Sicherheitselement auf seiner ganzen Fläche wellig erscheint bzw. wie auf einer Oberfläche mit starker Oberflächenrauhigkeit aufgebracht erscheint. Das optische Erscheinungsbild des Sicherheitselements wird, teilweise bis zur Unkenntlichkeit seines Informationsgehalts, stark beeinträchtigt. Besonders betroffen sind dabei dünne Sicherheitselemente, die in einer Dicke im Bereich von 3 µm bis etwa 100 µm auf die Trägerfolie aufgebracht sind.

Dieser Effekt kann sich aber auch bei Verwendung anderer Trägerfolien anstelle von PVC, wie beispielsweise bei Trägerfolien aus Polyethylenterephthalat, Polyethylennaphtalat, PET-G, PC, ABS, Compounds dieser Kunststoffe inklusive PVC, Schichtverbunden dieser Kunststoffe mit Papier und/oder Teslin^{®}, zeigen.

Es stellt sich somit die Aufgabe, ein verbessertes Verfahren zur Herstellung eines laminierten Schichtverbunds ohne den Orangenhauteffekt bereitzustellen.

Die Aufgabe wird gelöst durch ein Verfahren gemäß Anspruch 1. Die Erfindung betrifft weiterhin nach ein Schichtverbund gemäß Anspruch 14 und dessen Verwendung gemäß Anspruch 15.

Das Tempern der Trägerfolie oder zumindest eines Bereichs der Trägerfolie, auf welche ein Sicherheitselement aufgebracht werden soll, bewirkt offenbar eine lokale Reduzierung der inneren Spannung in der Trägerfolie. Während eine zuvor nicht getemperte Trägerfolie, insbesondere aus den bereits oben genannten Materialien wie PVC, PET, PEN, ABS usw., im Bereich eines Sicherheitselements nach dem Laminieren mit einer weiteren Kunststofffolie und Abkühlen des Schichtverbunds den beschriebenen Orangenhauteffekt zeigt, ist dieser bei Verwendung einer zuvor getemperten Trägerfolie nach dem Laminieren und Abkühlen nicht mehr oder nur noch in einem äußerst geringen und optisch nicht mehr störenden Ausmaß vorhanden. Das erneute Erwärmen einer Trägerfolie, insbesondere aus PVC oder PET, beim Laminieren mit einer weiteren Kunststofffolie beeinträchtigt das Erscheinungsbild des Sicherheitselements somit nicht mehr oder nur noch unwesentlich.

Dabei genügt es in einigen Fällen, wenn die Trägerfolie vor dem Aufbringen des Sicherheitselements zumindest in einem Bereich, in welchem das Sicherheitselement aufgebracht wird, getempert wird. Dies kann beispielsweise durch Vorprägen mit einem beheizten Stempel erfolgen, welcher zumindest in dem Bereich, in welchem das Sicherheitselement aufgebracht werden soll, aufgedrückt wird. Vorzugsweise wird aber die gesamte Trägerfolie vor dem Aufbringen des Sicherheitselements getempert.

Das Tempern kann mittels IR-Strahlern, beheizten Walzen, Platten oder Bändern, Zuführen eines Heißgasstroms oder ähnlichem sowie Kombinationen daraus erfolgen. Dabei kann das Tempern der Trägerfolie mit oder ohne Beaufschlagung der Trägerfolie mit Druck erfolgen. Weiterhin kann die Trägerfolie direkt nach deren Herstellung bzw. Formgebung in einem direkt nachfolgenden Prozessschritt, also "inline", erfolgen oder alternativ zu einem späteren Zeitpunkt, also "offline", beim Verbraucher der Trägerfolie.

Vorzugsweise wird die Trägerfolie bei einer Temperatur getempert, die in einem Bereich von 10° unterhalb der Erweichungstemperatur bis oberhalb der Erweichungstemperatur der mindestens einen polymeren Schichtlage liegt. Je höher die Temperatur beim Tempern, desto besser werden die inneren Spannungen in der polymeren Schichtlage der Trägerfolie, die vermutlich während deren Herstellung eingebracht wurden, eliminiert. Es wird derzeit davon ausgegangen, dass insbesondere Herstellungsverfahren für polymere Schichtlagen, wie das Kalandrieren oder Extrudieren, bei denen der erweichte Kunststoff unter starker Druck- oder Zugbelastung abgekühlt wird, zu hohen inneren Spannungen führen. Eine Erwärmung der Trägerfolie erfolgt beim Tempern nur insoweit, als die äußere Form der Trägerfolie zumindest im Wesentlichen erhalten bleibt.

Es hat sich bewährt, wenn die Trägerfolie bei einer Temperatur im Bereich von 100 bis 160°C getempert wird.

Weiterhin hat es sich vorteilhaft erwiesen, wenn die Trägerfolie unter Einwirkung von Druck im Bereich von 500 bis 4000 kN/m² getempert wird. Der Druck wird insbesondere mit Erhöhung der Temperatur beim Tempern der Trägerfolie gesteigert und anschließend über eine bestimmte Zeitspanne konstant gehalten.

Es hat sich bewährt, wenn die Trägerfolie zumindest in dem Bereich, in welchem das Sicherheitselement aufgebracht wird, mindestens über einen Zeitraum von 120 Sekunden, insbesondere über einen Zeitraum von mindestens 240 Sekunden, auf einer Temperatur oberhalb einer Erweichungstemperatur des jeweiligen Kunststoffs gehalten wird.

Es hat sich weiterhin bewährt, wenn die Trägerfolie bei einer Temperatur getempert wird, die unterhalb einer Erweichungstemperatur der mindestens einen polymeren Schichtlage und in einem Bereich von bis zu 10°C unterhalb einer Erweichungstemperatur der mindestens einen polymeren Schichtlage liegt. Es hat sich gezeigt, dass ein Tempern in diesem Temperaturbereich bereits ausreichend ist, um den Orangenhauteffekt nicht auftreten zu lassen. Dies ist umso überraschender, da ein Laminieren von Trägerfolie mit Sicherheitselement und Kunststofffolie üblicherweise bei einer Temperatur oberhalb der Erweichungstemperatur der mindestens einen polymeren Schichtlage erfolgt und davon ausgegangen worden war, dass das Laminieren allein bereits ausreichen würde, die Trägerfolie entsprechend zu tempern. Dies ist allerdings nicht der Fall, sondern ein separates Tempern der Trägerfolie vor der Applikation des Sicherheitselements ist erforderlich.

Vorzugsweise wird die Trägerfolie dabei zumindest in dem Bereich, in welchem das Sicherheitselement aufgebracht wird, mindestens über einen Zeitraum von 120 Sekunden, insbesondere über einen Zeitraum von mindestens 240 Sekunden, auf einer Temperatur unterhalb einer Erweichungstemperatur der mindestens einen polymeren Schichtlage und in einem Bereich von bis zu 10°C unterhalb der Erweichungstemperatur der mindestens einen polymeren Schichtlage gehalten.

Die mindestens eine polymere Schichtlage der Trägerfolie kann aus PVC-P oder PVC-U, PET, PEN, ABS, Compounds dieser Kunststoffe inklusive PVC gebildet sein.

Die Trägerfolie kann aus einer einzigen oder mehreren polymeren Schichtlagen aufgebaut sein oder als Verbund einer oder mehrerer polymerer Schichtlagen mit Papier und/oder Teslin^{®} gebildet sein.

Die Trägerfolie wird bevorzugt in einer Dicke im Bereich von 12 µm bis 1 mm gewählt.

Es hat sich bewährt, wenn die Trägerfolie auf eine Temperatur unterhalb von 50°C abgekühlt wird, bevor das Sicherheitselement darauf aufgebracht wird.

Weiterhin ist es von Vorteil, wenn die Trägerfolie unter Einwirkung von Druck im Bereich von 500 bis 4000 kN/m² abgekühlt wird. Dies ermöglicht die Ausbildung von besonders glatten und optisch einwandfreien äußerer Oberflächen des laminierten Schichtverbunds.

Besonders bevorzugt ist es, wenn das Sicherheitselement durch Prägen, insbesondere Heißprägen, oder durch Kleben auf eine erste und/oder eine zweite Seite der Trägerfolie aufgebracht wird. Das Beprägen der Trägerfolie erfolgt schnell und kostengünstig.

Besonders bevorzugt ist es, wenn das Sicherheitselement in einer Dicke im Bereich von 3 µm bis 100 µm, insbesondere im Bereich von 3 µm bis 30µm, auf die Trägerfolie aufgebracht wird. Falls das Sicherheitselement verhältnismäßig dick ausgeführt wird, z. B. mit einer Dicke von 100 µm oder mehr, ist es bevorzugt, an der Stelle, an der das Sicherheitselement in den Schichtverbund eingefügt werden soll, entsprechende Vertiefungen oder dergleichen vorzusehen. Derartige Maßnahmen erübrigen sich jedoch, wenn das Sicherheitselement als ganzflächige Folie des Schichtverbunds vorgesehen ist. In diesem Fall kann das Sicherheitselement auch deutlich dicker als 100 µm ausgeführt sein.

Das Sicherheitselement selbst umfasst bevorzugt mehrere Schichtlagen. Diese werden vorzugsweise von einer Übertragungslage einer Transferfolie bereitgestellt, wobei das Sicherheitselement von der Transferfolie auf die Trägerfolie übertragen wird.

Insbesondere ist es bevorzugt, wenn das Sicherheitselement zumindest bereichsweise eine metallische und/oder eine dielektrische Reflexionsschicht umfasst. Es kann sich hierbei auch um Dünnfilmstapel aus mehr als zwei Schichten zur Erzeugung von blickwinkelabhängigen Farbwechseleffekten mittels Interferenz handeln. Der Orangenhauteffekt tritt beim Vorsehen einer Reflexionsschicht im Schichtaufbau des Sicherheitselements besonders stark in Erscheinung, so dass die Verbesserung, welche mit dem erfindungsgemäßen Verfahren erzielt wird, besonders augenscheinlich wird. Sieht man in einer metallischen und/oder dielektrischen Reflexionsschicht Unterbrechungen in Form von Schriftzeichen, Mustern oder dergleichen vor, wird damit ein zusätzlicher Sicherheitseffekt erreicht. Derartige Unterbrechungen können beispielsweise mittels einer Laserpersonalisierung erzeugt werden. Dabei kann mit dem Laser auch eine Markierung durch ein optisch variables Element hindurch in einer darunter angeordneten, gezielt ausgewählten Schichtlage erzeugt werden.

Es ist bevorzugt, wenn das Sicherheitselement eine diffraktive Reliefstruktur, insbesondere ein Hologramm, Kinegram^{®} oder ein Beugungsgitter, umfasst. Weiterhin hat es sich bewährt, wenn das Sicherheitselement optisch und/oder optomagnetisch maschinenlesbare Strukturen aufweist. Ein Orangenhauteffekt im Bereich des Sicherheitselements beeinträchtigt derartige diffraktive oder maschinenlesbare Strukturen besonders stark, so dass auch für derartige Sicherheitselemente die erfindungsgemäß erzielte Verbesserung deutlich sichtbar bzw. merklich wird.

Es hat sich bewährt, wenn das Sicherheitselement mindestens zwei Schichtlagen umfasst, zwischen welchen die diffraktive Reliefstruktur eingebettet ist, wobei mindestens eine der zwei Schichtlagen, vorzugsweise beide Schichtlagen, bei der Erweichungstemperatur des Polyvinlychlorids der Trägerfolie nicht erweichen. Wenn die Reliefstruktur des Sicherheitselements in einem Material wie Kunststoff oder Lack vorliegt, das entweder von Natur aus eine vergleichsweise hohe Erweichungstemperatur hat oder zumindest nach Erzeugung der Reliefstruktur in einen Zustand mit hoher Erweichungstemperatur gebracht wird, und wenn die Folien zur Herstellung der Karte mittels Lamination so gewählt werden, dass diese eine geringere Erweichungstemperatur aufweisen, wird sichergestellt, dass die Reliefstruktur des Sicherheitselements durch die beim Laminieren auftretenden Temperatur- und Druckbelastungen nicht oder zumindest nicht wesentlich in Mitleidenschaft gezogen wird. Die Materialien für die Folien des Schichtverbunds und für die Schichtlagen des Sicherheitselements werden bevorzugt so gewählt, dass die jeweiligen Erweichungstemperaturen während des Laminierens ausreichend unterschiedlich sind. Als bevorzugtes Material, in dem die Reliefstruktur vorliegt, werden Kunststoffe, Lacke usw. mit höherer Erweichungstemperatur verwendet, insbesondere Duroplaste, ausgehärtete Lacke oder dergleichen. Gut geeignet ist beispielsweise kristallines Polyester. Ebenfalls eignen sich durch Vernetzung ausgehärtete Lacke. Als vernetzende Reaktionslacke eignen sich beispielsweise strahlungshärtbare Lacke, insbesondere radikalisch und kationisch härtende, insbesondere unter UV-Bestrahlung härtende Lacke sowie unter Blaulicht-Bestrahlung härtende Lacke.

Das Sicherheitselement kann weitere, gegebenenfalls musterförmig bzw. lediglich bereichsweise vorgesehene Schichten beinhalten, insbesondere gedruckte farbige Schichten, Schichten mit einen optisch variablen Effekt aufweisenden Effektpigmenten oder Zusatzstoffen wie lumineszierenden oder photochromen Substanzen, Flüssigkristallschichten, magnetische Schichten usw. beinhalten.

Das Sicherheitselement kann weiterhin in einem Fenster des laminierten Schichtverbunds angeordnet sein und somit auf beiden Seiten, beispielsweise einer Karte, sichtbar sein. Dabei wäre ein auftretender Orangenhauteffekt auf beiden Seiten des Schichtverbunds erkennbar und würde das Erscheinungsbild stören.

Vorzugsweise wird mindestens eine Kunststofffolie auf eine erste Seite und/oder eine zweite Seite der Trägerfolie laminiert. Es können somit mehrere Kunststofffolien auf eine oder beide Seiten der Trägerfolie laminiert werden. Besonders bevorzugt ist es im Hinblick auf den Schutz des Sicherheitselements vor mechanischen Beanspruchungen oder chemischen Angriffen, dass mindestens eine Kunststofffolie mindestens auf die Seite der Trägerfolie laminiert wird, auf welcher das Sicherheitselement aufgebracht worden ist. Das Sicherheitselement wird dabei im laminierten Schichtverbund eingebettet. Dabei wird die mindestens eine Kunststofffolie und/oder die Trägerfolie so gewählt, dass diese ausreichend transparent ist/sind, um die Überprüfung des Sicherheitselements durch einen Betrachter zumindest von einer Seite des laminierten Schichtverbunds her zu ermöglichen.

Sind die Trägerfolie und die mindestens eine Kunststofffolie transparent ausgebildet und ist zudem das Sicherheitselement ganz oder bereichsweise transparent ausgeführt, kann mittels opaken Aufdrucken das optische Aussehen einer herkömmlichen Karte erzielt werden, bei der durchsichtige Fenster vorgesehen sind. In einem solchen durchsichtigen Fenster kann das Sicherheitselement mit optischen Beugungsstrukturen zu erkennen sein. Verwendet man ein durchgehend opakes Sicherheitselement, können auf beiden Seiten des Sicherheitselements ggf. im selben Bereich des Schichtverbunds, Beugungsstrukturen vorgesehen sein, die von beiden Seiten des Schichtverbunds her überprüfbar sind. In diesem Fall können die optischen Beugungseffekte auf beiden Seiten auch unterschiedliche Beugungseffekte, z. B. unterschiedliche holographische Informationen, bereitstellen.

Als Material für die Folien des laminierten Schichtverbunds werden üblicherweise Thermoplaste verwendet, die von Natur aus üblicherweise eine geringe Erweichungstemperatur im Bereich von 65 bis 150°C besitzen. Im Hinblick auf einen Schutz des Sicherheitselements vor Fälschungsversuchen oder mechanischem Abrieb im späteren Gebrauch des laminierten Schichtverbunds hat es sich bewährt, wenn die mindestens eine Kunststofffolie aus Polyvinylchlorid, Polyester, Polyethylenterephthalat, Polycarbonat, PETG, ABS, Polyethylen, Polyethylennaphtalat oder Compounds dieser Kunststoffe gebildet wird. Die mindestens eine Kunststofffolie kann auch aus unterschiedlichen Lagen dieser Kunststoffe und/oder Compounds gebildet sein.
Im Hinblick auf eine kostengünstige Herstellung ist eine Kunststofffolie, die aus PVC gebildet ist, besonders bevorzugt. Dabei kann die Kunststofffolie aus PVC in getemperter oder ungetemperter Form eingesetzt werden, wobei eine Temperung gemäß den oben für die Trägerfolie beschriebenen Bedingungen erfolgen kann.

Es hat sich bewährt, wenn eine erste Kunststofffolie auf eine erste Seite der Trägerfolie und eine zweite Kunststofffolie auf eine zweite Seite der Trägerfolie laminiert wird, wobei die erste Kunststofffolie und die zweite Kunststofffolie aus dem gleichen Material, insbesondere aus Polyvinylchlorid, gebildet sind.

Ein nach dem erfindungsgemäßen Verfahren hergestellter laminierter Schichtverbund umfasst eine zumindest bereichsweise getemperte Trägerfolie aus Polyvinylchlorid oder Polyethylenterepthalat, mindestens ein auf die Trägerfolie aufgebrachtes Sicherheitselement und mindestens eine Kunststofffolie und zeigt optisch einwandfreie Sicherheitselemente.

Vorzugsweise ist dabei auch die mindestens eine Kunststofffolie aus dem gleichen Material wie die Trägerfolie gebildet.

Eine Verwendung eines solchen laminierten Schichtverbunds als mehrschichtige Karte, insbesondere als Bankkarte, Kreditkarte, Führerschein oder ldentifikationskarte, ist ideal.

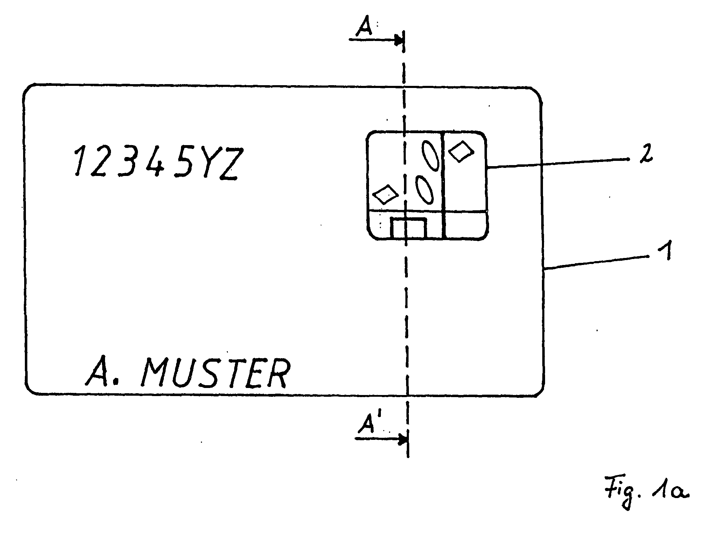

Die Figuren 1a bis 1 e sollen das erfindungsgemäße Verfahren anhand eines beispielhaft gewählten Aufbaus eines laminierten Schichtverbunds in Kartenform sowie eines Sicherheitselements beispielhaft erläutern. So zeigt
- Figur 1a: einen laminierten Schichtverbund in Kartenform inklusive Sicherheitselement;

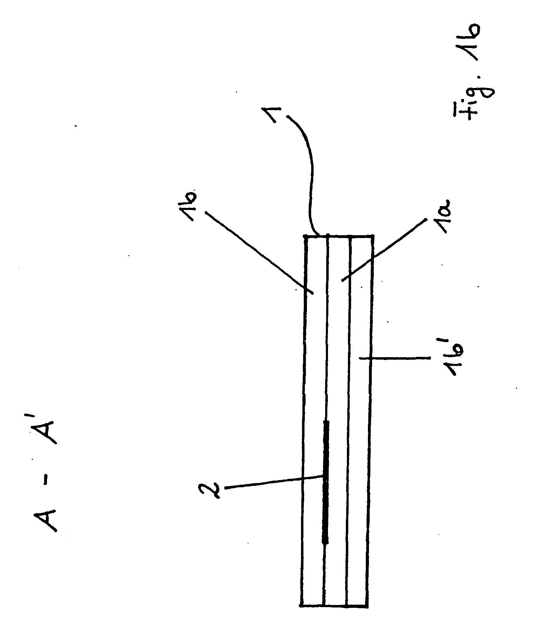

- Figur 1b: einen Querschnitt A - A' durch den laminierten Schichtverbund aus Figur 1a in Höhe des Sicherheitselements;

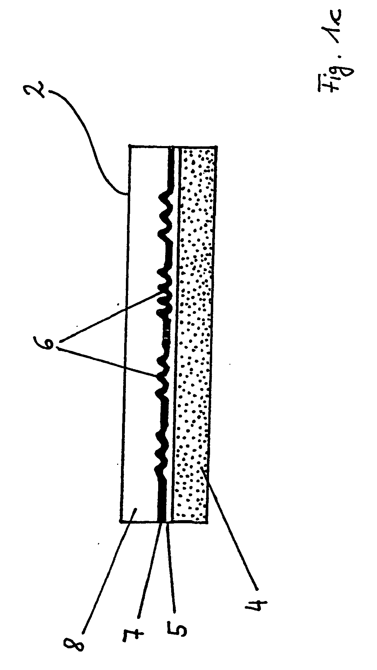

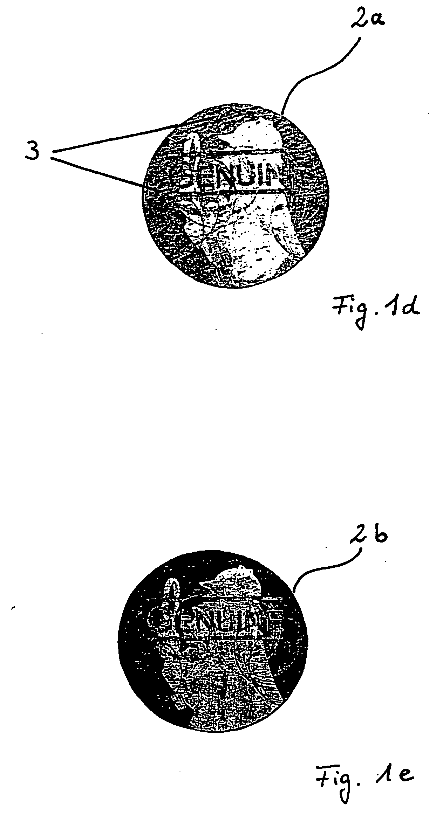

- Figur 1c: den Aufbau des Sicherheitselements aus Figur 1 b vergrößert und im Querschnitt dargestellt;
- Figur 1d: ein Sicherheitselement mit Orangenhauteffekt und
- Figur 1e: das Sicherheitselement gemäß Figur 1d ohne Orangenhauteffekt.

Figur 1a zeigt einen laminierten Schichtverbund 1 in Kartenform inklusive einem Sicherheitselement 2. Das Sicherheitselement 2, das nur in einem Bereich des Schichtverbunds 1 angeordnet ist, zeigt einen für den Betrachter leicht zu überprüfenden, optisch variablen Effekt. Der laminierte Schichtverbund 1 weist neben dem Sicherheitselement 2 eine Prägung in Form eines Namenszuges (A. Muster) und eine Identifikationsnummer (12345YZ) auf, welche mittels opaker Druckfarbe auf einer der Lagen des Schichtverbunds 1 gebildet und im Schichtverbund 1 eingebettet ist.

Figur 1 b zeigt einen Querschnitt A - A' durch den laminierten Schichtverbund 1 aus Figur 1a in Höhe des Sicherheitselements 2. Das Sicherheitselement 2 ist auf einer getemperten Trägerfolie 1a aus PVC durch ein Heißprägeverfahren befestigt worden, wobei eine herkömmliche Transferfolie eingesetzt wurde. Das aus der Übertragungslage der Transferfolie herausgelöste Sicherheitselement 2 weist eine Dicke von insgesamt 6 µm auf. Die Trägerfolie 1 a aus PVC kann opak oder transparent ausgebildet sein. Hier wurde beispielhaft eine transparente PVC-Folie vom Typ "clear matte core CV" mit einer Dicke von 650 µm der Fa. Lucchesi (IT) verwendet, die vor dem Aufbringen des Sicherheitselements 2 folgendermaßen getempert wurde:

Die bandförmige Folie aus PVC wurde von einer Vorratsrolle abgezogen und zwischen beheizte Walzen gefördert. Dabei erfolgte ein Aufheizen der PVC-Folie auf 160°C und eine Drucksteigerung auf 900 kN/m². Nach 240 Sekunden unter diesen Temperatur- und Druckbedingungen erfolgte eine Druckerhöhung auf 2700 kN/m², wobei dieser Druck und die Temperatur von 160 °C an der PVC-Folie über einen Zeitraum von 240 Sekunden konstant gehalten wurde. Vor dieser weiteren Druckerhöhung kann alternativ auch eine Druckentlastung der aufgeheizten Folie erfolgen. Auch während der einzelnen Drucksteigerungs- oder Haltezyklen kann generell zwischenzeitlich eine kurze Druckentlastung der aufgeheizten Folie erfolgen. Anschließend wurde die PVC-Folie entlastet und abgekühlt.

Nach dem Abkühlen der getemperten PVC-Folie bzw. Trägerfolie 1 a auf Raumtemperatur wurde das Sicherheitselement 2 partiell auf eine Seite der getemperten Trägerfolie 1a aufgeprägt. Nach Aufprägen des Sicherheitselements 2 wurde auf der Seite der getemperten Trägerfolie 1a, auf welcher das Sicherheitselement 2 aufgebracht wurde, eine erste transparente Kunststofffolie 1 b aus PVC in einer Dicke von 75 µm auflaminiert. Eine zweite transparente Kunststofffolie 1 b' aus PVC in einer Dicke von 75 µm wurde - gleichzeitig mit der ersten transparenten Kunststofffolie 1 b oder danach - auf die Rückseite der Trägerfolie 1a auflaminiert.
Das Sicherheitselement 2 ist für einen Betrachter durch die erste Kunststofffolie 1 b und gegebenenfalls auch oder alternativ durch die zweite Kunststofffolie 1 b' und die Trägerfolie 1 a sichtbar. Das Laminieren der Trägerfolie 1a und der Kunststofffolien 1 b, 1 b' erfolgte bei einer Temperatur von 160°C und einem Druck von 900 kN/m² über einen Zeitraum von 4 Minuten. Durch einige wenige Versuche ist der Fachmann jedoch generell in der Lage, die möglichen bzw. optimalen Laminierbedingungen für den jeweiligen Schichtverbund festzustellen.

Figur 1 c zeigt den Aufbau des Sicherheitselements 2 aus Figur 1 b vergrößert und im Querschnitt dargestellt. Es ist eine Heißkleberschicht 4 erkennbar, welche das Sicherheitselement 2 an der hier nicht dargestellten getemperten Trägerfolie 1a aus PVC fixiert. Weiterhin weist das Sicherheitselement 2 eine Haftvermittlerschicht 5 und eine vernetzte Lackschicht 8, welche glasklar transparent ausgebildet ist, auf. Zwischen der Haftvermittlerschicht 5 und der Lackschicht 8 ist eine diffraktive Reliefstruktur 6 abgeformt und weiterhin vollflächig eine opake metallische Reflexionsschicht 7 angeordnet. Die Lackschicht 8 ist hier beispielhaft als vernetzte Schicht ausgebildet. Es kann aber auch eine nicht vernetzte Lackschicht ausgebildet sein. Sofern die Haftvermittlerschicht 5 und die Kleberschicht 4 transparent ausgebildet sind, ist der optische Effekt das Sicherheitselements 2 seitenverkehrt durch die zweite Kunststofffolie 1b' und die Trägerfolie 1a hindurch zu erkennen.

Figur 1 d zeigt nun ein Sicherheitselement 2a, wie es in Figur 1a unter Bezugsziffer 2 lediglich schematisch gezeigt ist, welches vollflächig mit einer opaken Metallschicht hinterlegt ist und auf eine nicht getemperte Trägerfolie aus PVC aufgebracht und mit einer Kunststofffolie aus PVC gemäß den oben genannten Laminierbedingungen überlaminiert wurde. Nach dem Laminieren zeigt das Sicherheitselement 2a einen Orangenhauteffekt 3, welcher das optische Erscheinungsbild des gesamten Sicherheitselements 2a, in der Kopie allerdings besonders sichtbar in Bereichen mit einem ebenen Metallspiegel (hier der Hintergrundbereich), negativ beeinflusst.

Figur 1 e zeigt ein Sicherheitselement 2b, wie es in Figur 1 d unter Bezugsziffer 2a gezeigt ist, welches jedoch auf eine zuvor getemperte Trägerfolie aus PVC aufgebracht und mit einer Kunststofffolie aus PVC gemäß den oben genannten Laminierbedingungen überlaminiert wurde. Nach dem Laminieren zeigt das Sicherheitselement 2b keinen Orangenhauteffekt und das optische Erscheinungsbild des Sicherheitselements 2b ist einwandfrei (in der Kopie insbesondere im direkten Vergleich der Hintergrundbereiche von Figur 1d und Figur 1e erkennbar).

Dem Fachmann stehen zur Ausführung des erfindungsgemäßen Verfahrens eine Vielzahl an weiteren möglichen Aufbauten für den Schichtverbund, an verwendbaren Folienmaterialien, Temper- und Laminierbedingungen zur Verfügung, die jeweils nur wenige Versuche erfordern, um erfindungsgemäß verwendet werden zu können.

## Patentansprüche

1. Verfahren zur Herstellung eines laminierten Schichtverbunds umfassend eine Trägerfolie (1a), welche mindestens eine polymere Schichtlage, insbesondere aus Polyvinylchlorid oder Polyethylenterephthalat, aufweist, mindestens ein auf die mindestens eine polymere Schichtlage aufgebrachtes Sicherheitselement (2) und mindestens eine Kunststofffolie (1b, 1b'),
wobei die Trägerfolie (1 a) vor dem Aufbringen des Sicherheitselements (2) zumindest in einem Bereich, in welchem das Sicherheitselement (2) aufgebracht wird, getempert wird, wobei die Trägerfolie (1a) und die mindestens eine Kunststofffolie (1b, 1b') nach dem Aufbringen des Sicherheitselements (2) auf die polymere Schichtlage unter Bildung des laminierten Schichtverbunds laminiert werden, und wobei ein Laminieren der Trägerfolie (1a) und der Kunststofffolie (1b, 1b') bei einer Temperatur oberhalb einer Erweichungstemperatur der mindestens einen polymeren Schichtlage erfolgt.

2. Verfahren nach Anspruch 1,
**dadurch gekennzeichnet,**
**dass** die gesamte Trägerfolie (1a) vor dem Aufbringen des Sicherheitselements (2) getempert wird.

3. Verfahren nach einem der Ansprüche 1 oder 2,
**dadurch gekennzeichnet,**
**dass** die Trägerfolie (1a) bei einer Temperatur getempert wird, die in einem Bereich von 10°C unterhalb einer Erweichungstemperatur bis oberhalb der Erweichungstemperatur der mindestens einen polymeren Schichtlage liegt.

4. Verfahren nach einem der Ansprüche 1 bis 3,
**dadurch gekennzeichnet,**
**dass** die Trägerfolie (1a) bei einer Temperatur im Bereich von 100 bis 160°C getempert wird.

5. Verfahren nach einem der Ansprüche 1 bis 4,
**dadurch gekennzeichnet,**
**dass** die Trägerfolie (1a) unter Einwirkung von Druck im Bereich von 500 bis 4000 kN/m² getempert wird.

6. Verfahren nach einem der Ansprüche 1 bis 5,
**dadurch gekennzeichnet,**
**dass** die Trägerfolie (1a) zumindest in dem Bereich, in welchem das Sicherheitselement (2) aufgebracht wird, mindestens über einen Zeitraum von 120 Sekunden, insbesondere über einen Zeitraum von mindestens 240 Sekunden, auf einer Temperatur oberhalb einer Erweichungstemperatur der mindestens einen polymeren Schichtlage gehalten wird.

7. Verfahren nach einem der Ansprüche 1 bis 5,
**dadurch gekennzeichnet,**
**dass** die Trägerfolie (1a) bei einer Temperatur getempert wird, die unterhalb einer Erweichungstemperatur der mindestens einen polymeren Schichtlage und in einem Bereich von bis zu 10°C unterhalb der Erweichungstemperatur der mindestens einen polymeren Schichtlage liegt.

8. Verfahren nach Anspruch 7,
**dadurch gekennzeichnet,**
**dass** die Trägerfolie (1a) zumindest in dem Bereich, in welchem das Sicherheitselement (2) aufgebracht wird, mindestens über einen Zeitraum von 120 Sekunden, insbesondere über einen Zeitraum von mindestens 240 Sekunden, auf einer Temperatur unterhalb der Erweichungstemperatur der mindestens einen polymeren Schichtlage und in einem Bereich von bis zu 10°C unterhalb der Erweichungstemperatur der mindestens einen polymeren Schichtlage gehalten wird.

9. Verfahren nach einem der Ansprüche 1 bis 8,
**dadurch gekennzeichnet,**
**dass** die mindestens eine polymere Schichtlage aus PVC-P, PVC-U, PET, PEN, PET-G, PC, ABS oder Compounds dieser Kunststoffe gebildet ist.

10. Verfahren nach einem der Ansprüche 1 bis 9,
**dadurch gekennzeichnet,**
**dass** die Trägerfolie als ein Verbund aus mindestens einer polymeren Schichtlage und Papier und/oder Teslin^{®} ausgebildet wird.

11. Verfahren nach einem der Ansprüche 1 bis 10,
**dadurch gekennzeichnet,**
**dass** die Trägerfolie (1a) eine Dicke im Bereich von 12 µm bis 1 mm aufweist.

12. Verfahren nach einem der Ansprüche 1 bis 11,
**dadurch gekennzeichnet,**
**dass** die Trägerfolie (1 a) auf eine Temperatur im Bereich von 10°C bis 50°C abgekühlt wird, bevor das Sicherheitselement (2) aufgebracht wird.

13. Verfahren nach Anspruch 12,
**dadurch gekennzeichnet,**
**dass** die Trägerfolie (1a) unter Einwirkung von Druck im Bereich von 500 bis 4000 kN/m² abgekühlt wird.

14. Laminierter Schichtverbund, hergestellt nach einem der Ansprüche 1 bis 13, umfassend eine zumindest bereichsweise getemperte Trägerfolie (1 a) aus Polyvinylchlorid oder Polyethylenterephthalat, mindestens ein auf die Trägerfolie (1 a) aufgebrachtes Sicherheitselement (2) und mindestens eine Kunststofffolie (1b, 1b'), wobei das Sicherheitselement (2) eine diffraktive Reliefstruktur (6) umfasst,
**dadurch gekennzeichnet,**
**dass** das Sicherheitselement (2) ferner mindestens zwei Schichtlagen umfasst, zwischen welchen die diffraktive Reliefstruktur (6) eingebettet ist, und dass mindestens eine der mindestens zwei Schichtlagen, insbesondere beide Schichtlagen, bei der Erweichungstemperatur der polymeren Schichtlage der Trägerfolie (1a) nicht erweicht/erweichen.

15. Verwendung eines laminierten Schichtverbunds nach Anspruch 14 als mehrschichtige Karte, insbesondere als Bankkarte, Kreditkarte, Führerschein oder Identifikationskarte.

## Claims

1. Method for the production of a laminated multilayer composite comprising a carrier film (1a), which has at least one polymer layer, in particular made from polyvinyl chloride or polyethylene terephthalate, at least one security element (2) applied to the at least one polymer layer and at least one plastic film (1b, 1b'),
wherein the carrier film (1a) is annealed before the application of the security element (2), at least in a region in which the security element (2) is applied, wherein the carrier film (1a) and the at least one plastic film (1b, 1b') are laminated after the application of the security element (2) to the polymer layer thus forming the laminated multilayer composite, and wherein a lamination of the carrier film (1a) and the plastic film (1b, 1b') takes place at a temperature above a softening temperature of the at least one polymer layer.

2. Method according to claim 1,
**characterised in that**,
the entire carrier film (1a) is annealed before the application of the security element (2).

3. Method according to one of claims 1 or 2,
**characterised in that**,
the carrier film (1a) is annealed at a temperature that lies in a range from 10°C below a softening temperature to above the softening temperature of the at least one polymer layer.

4. Method according to one of claims 1 to 3,
**characterised in that**,
the carrier film (1a) is annealed at a temperature in the range of 100 to 160°C.

5. Method according to one of claims 1 to 4,
**characterised in that**,
the carrier film (1a) is annealed under the influence of pressure in the range of 500 to 4000kN/m².

6. Method according to one of claims 1 to 5,
**characterised in that**,
the carrier film (1a) is held at a temperature that is above a softening temperature of the at least one polymer layer at least in the region in which the security element (2) is applied, at least over a period of time of 120 seconds, in particular over a period of time of at least 240 seconds.

7. Method according to one of claims 1 to 5,
**characterised in that**,
the carrier film (1a) is annealed at a temperature that lies below a softening temperature of the at least one polymer layer and in a range of up to 10°C below the softening temperature of the at least one polymer layer.

8. Method according to claim 7,
**characterised in that**,
the carrier film (1a) is held at a temperature below the softening temperature of the at least one polymer layer and in a range of up to 10°C below the softening temperature of the at least one polymer layer, at least in the region in which the security element (2) is applied, at least over a period of time of 120 seconds, in particular over a period of time of at least 240 seconds.

9. Method according to one of claims 1 to 8,
**characterised in that**,
the at least one polymer layer is formed from PVC-P, PVC-U, PET, PEN, PET-G, PC, ABS or compounds of these plastics.

10. Method according to one of claims 1 to 9,
**characterised in that**,
the carrier film is designed as a composite of at least one polymer layer and paper and/or Teslin®.

11. Method according to one of claims 1 to 10,
**characterised in that**,
the carrier film (1a) has a thickness in the range of 12µm to 1mm.

12. Method according to one of claims 1 to 11,
**characterised in that**,
the carrier film (1a) is cooled to a temperature in the range of 10°C to 50°C before the security element (2) is applied.

13. Method according to claim 12,
**characterised in that**,
the carrier film (1a) is cooled under the influence of pressure in the range of 500 to 4000kN/m².

14. Laminated multilayer composite, produced according to one of claims 1 to 13, comprising a carrier film (1a) made from polyvinyl chloride or polyethylene terephthalate, which is annealed at least in certain regions, at least one security element (2) applied to the carrier film (1a) and at least one plastic film (1b, 1b'), wherein the security element (2) comprises a diffractive relief structure (6),
**characterised in that**,
the security element (2) furthermore comprises at least two layers, between which the diffractive relief structure (6) is embedded, and that at least one of the at least two layers, in particular both layers, does/do not soften at the softening temperature of the polymer layer of the carrier film (1a).

15. Use of a laminated multilayer composite according to claim 14 as a multilayer card, in particular as a bank card, credit card, driving licence or identification card.

## Revendications

1. Procédé pour fabriquer un composite stratifié laminé comportant un film porteur (1a) qui présente au moins une couche stratifiée polymère, en particulier en chlorure de polyvinyle ou polyéthylènetéréphtalate, au moins un élément de sécurité (2) appliqué sur l'au moins une couche stratifiée polymère et au moins un film plastique (1b, 1b'),
le film porteur (1a) étant étuvé après cuisson avant l'application de l'élément de sécurité (2) au moins dans une zone, dans laquelle l'élément de sécurité (2) est appliqué, le film porteur (1a) et l'au moins un film plastique (1b, 1b') étant laminés après l'application de l'élément de sécurité (2) sur la couche stratifiée polymère en formant le composite stratifié laminé, et un laminage du film porteur (1a) et du film plastique (1b, 1b') étant réalisé à une température supérieure à une température de ramollissement de l'au moins une couche stratifiée polymère.

2. Procédé selon la revendication 1, **caractérisé en ce que** le film porteur entier (1a) est étuvé après cuisson avant l'application de l'élément de sécurité (2).

3. Procédé selon l'une quelconque des revendications 1 ou 2, **caractérisé en ce que** le film porteur (1a) est étuvé après cuisson à une température qui se trouve dans une plage de 10°C sous une température de ramollissement jusqu'au-dessus de la température de ramollissement de l'au moins une couche stratifiée polymère.

4. Procédé selon l'une quelconque des revendications 1 à 3, **caractérisé en ce que** le film porteur (1a) est étuvé après cuisson à une température dans la plage de 100 à 160°C.

5. Procédé selon l'une quelconque des revendications 1 à 4, **caractérisé en ce que** le film porteur (1a) étuvé après cuisson sous l'action de la pression dans la plage de 500 à 4 000 kN/m².

6. Procédé selon l'une quelconque des revendications 1 à 5, **caractérisé en ce que** le film porteur (1a) est maintenu au moins dans la zone, dans laquelle l'élément de sécurité (2) est appliqué, au moins pendant une période de 120 secondes, en particulier pendant une période d'au moins 240 secondes, à une température supérieure à une température de ramollissement de l'au moins une couche stratifiée polymère.

7. Procédé selon l'une quelconque des revendications 1 à 5, **caractérisé en ce que** le film porteur (1a) est étuvé après cuisson à une température qui se trouve inférieure à une température de ramollissement de l'au moins une couche stratifiée polymère et dans une plage allant jusqu'à 10°C sous la température de ramollissement de l'au moins une couche stratifiée polymère.

8. Procédé selon la revendication 7, **caractérisé en ce que** le film porteur (1a) est maintenu au moins dans la zone, dans laquelle l'élément de sécurité (2) est appliqué, au moins pendant une période de 120 secondes, en particulier pendant une période d'au moins de 240 secondes, à une température inférieure à la température de ramollissement de l'au moins une couche stratifiée polymère et dans une plage allant jusqu'à 10°C sous la température de ramollissement de l'au moins une couche stratifiée polymère.

9. Procédé selon l'une quelconque des revendications 1 à 8, **caractérisé en ce que** l'au moins une couche stratifiée polymère est constituée de PVC-P, PVC-U, PET, PEN, PET-G, PC, ABS ou composites de ces matières plastiques.

10. Procédé selon l'une quelconque des revendications 1 à 9, **caractérisé en ce que** le film porteur est réalisé comme un composite d'au moins une couche stratifiée polymère et de papier et/ou Teslin®.

11. Procédé selon l'une quelconque des revendications 1 à 10, **caractérisé en ce que** le film porteur (1a) présente une épaisseur comprise dans la plage de 12 µm à 1 mm.

12. Procédé selon l'une quelconque des revendications 1 à 11, **caractérisé en ce que** le film porteur (1a) est refroidi à une température dans la plage de 10 à 50°C avant que l'élément de sécurité (2) ne soit appliqué.

13. Procédé selon la revendication 12, **caractérisé en ce que** le film porteur (1a) est refroidi sous l'action de la pression dans la plage de 500 à 4 000 kN/m².

14. Composite stratifié laminé fabriqué selon l'une quelconque des revendications 1 à 13, comportant un film porteur (1a) étuvé après cuisson au moins par endroits en chlorure de polyvinyle ou polyéthylènetéréphtalate, au moins un élément de sécurité (2) appliqué sur le film porteur (1a) et au moins un film plastique (1b, 1b'), l'élément de sécurité (2) comportant une structure en relief diffractive,
**caractérisé en ce que** l'élément de sécurité (2) comporte de plus au moins deux couches stratifiées, entre lesquelles la structure en relief diffractive (6) est intégrée, et **en ce qu'**au moins l'une des au moins deux couches stratifiées, en particulier les deux couches stratifiées ne se ramollissent pas à la température de ramollissement de la couche stratifiée polymère du film porteur (1a).

15. Utilisation d'un composite stratifié laminé selon la revendication 14 comme carte à plusieurs couches en particulier comme une carte bancaire, une carte de crédit, un permis de conduire ou une carte d'identification.
